# EUROPEAN PATENT SPECIFICATION

(11) **EP 2 214 586 B1**
(45) Date of publication and mention of the grant of the patent: **21.02.2018**
(21) Application number: 08840463.7
(22) Date of filing: 14.10.2008
(51) Int. Cl.: A61C 13/08, A61C 5/77, A61C 19/10

(54) **RESTORATION, RESTORATION COMPONENTS, AND METHODS OF MAKING A DENTAL RESTORATION**
PROTHESE, PROTHESENKOMPONENTEN UND VERFAHREN ZUR HERSTELLUNG EINER ZAHNPROTHESE
RESTAURATION, COMPOSANTS DE RESTAURATION, ET PROCÉDÉS POUR LA FABRICATION DE LA RESTAURATION DENTAIRE

(30) Priority: 15.10.2007 EP 07118476
(43) Date of publication of application: 11.08.2010
(73) Proprietor: 3M Innovative Properties Company, St. Paul, MN 55133-3427 (US)
(72) Inventor: BURGER, Bernd K., 82229 Seefeld (DE); HAUPTMANN, Holger, 82229 Seefeld (DE); SCHECHNER, Gallus, 82229 Seefeld (DE)
(74) Representative: Hohmann, Arno
(86) International application number: PCT/US2008/079788
(87) International publication number: WO 2009/052082

(56) References cited:
- US-A- 4 433 959
- US-A- 4 650 418
- US-A- 4 828 117
- US-A- 5 346 397
- US-A- 5 482 732
- US-A1- 2007 212 667

## Description

### Field of the Invention

The invention relates to the manufacture of a dental restoration, and in particular to a method of making a dental restoration using a combination of certain color shades.

### Background of the Invention

Dental restorations or prostheses are often made as a configuration of two or more components, with the individual components providing different characteristics for the restoration. For example, a framework may provide excellent structural support, and a veneer may provide excellent aesthetics. The framework generally is a supporting structure for the dental restoration that provides mechanical stability and usually comprises an interface by which the restoration can be affixed to a prepared tooth of a patient. The veneer provides for pleasing aesthetic characteristics that gives the restoration the shape and appearance of natural teeth. In addition, both the frame and the veneer are shaped to fit well with the adjacent and opposed teeth in a patient's mouth.

In recent years ceramic materials have been widely used for making high-quality dental restorations because of their good physical, aesthetic and biological properties. In some applications such dental restorations are made by combining a ceramic framework and a ceramic veneer. The framework and the veneer may, for example, be ground or milled from a ceramic blank, or cast from a molten ceramic material.

It is desirable that the dental restoration also has an appearance that matches or approximates the appearance of adjacent teeth. The appearance of natural teeth is on the one hand provided by color shades, and further by a certain translucency. A dental technician or a dental practitioner, for example, typically selects the color of the ceramic material to be used for the dental restoration according to the teeth in a patient's mouth that are located next to the tooth or teeth to be restored. For example, the appearance of relevant teeth in a patient's mouth may be determined using shade guides and the color shade for the framework and the veneer may be selected accordingly. The general types of ceramic or glass-ceramic materials for the framework and the veneer are typically selected to meet certain mechanical and aesthetic requirements for the dental restoration, one of which is the desired translucency.

Manufactures of dental ceramic materials in particular often offer one or more certain ceramic and/or glass-ceramic materials in a variety of different color shades, and a dental technician or a dental practitioner usually selects the shade of the material that is closest to the desired shade. Many approaches have been tried to provide ceramic material in color shades that match the desired color as closely as possible.

For example, US 4,433,959 discloses a composite laminate dental veneer with is provided with a color system that is said to render the appearance of the veneer substantially identical to that of natural teeth.

EP 1454596 discloses a method for making a veneer for dental restorations. The method comprises making a layered structure to achieve a natural appearance of the veneer. US2007/0212667 and US5346397 also disclose methods of manufacturing composite laminate dental restorations.

Although the current approaches for manufacturing of dental restorations may provide a variety of advantages, there is still a desire for a method of manufacturing dental restorations in a cost efficient manner and at a good aesthetic quality.

### Summary of the Invention

The invention is as defined in claim 1. The color shades as referred to in this specification are represented in terms of the L*a*b* colorimetric system CIE1976 (standardized 1976 by the Commission Internationale de l'Eclairage).

A color shade selected from among a continuous color range as referred to within this specification may be understood as color coordinates L*, a*, b* of which at least one coordinate can accept any numeric value between a lower limit and an upper limit. For example,
- L* may accept any numeric value between limits L*₁, and L*₂,
- a* may accept any numeric value between limits a*₁ and a*₂, and/or
- b* may accept any numeric value between limits b*₁ and b*₂.

A color shade selected from among a continuous color range as referred to within this specification may also be understood as color coordinates L*, a*, b* of which at least one coordinate can accept a numeric value selected from among a set of numeric values that are spaced by a first interval from one another.

A color shade selected from among a set of discrete color shades as referred to within this specification may be understood as color coordinates L*, a*, b* of which at least one coordinate can accept a numeric value selected from among a set of numeric values that are spaced by a second interval from one another, wherein the second interval is preferably greater than the first interval.

The first interval may be between 0.1 and 0.5 units in the L*a*b* system and the second interval may be between 1 and 10 units in the L*a*b* system. In particular, the first interval may be between 0.1 and 0.2 units in the L*a*b* system and the second interval may be between 1 and 5 units in the L*a*b* system.

In one embodiment the step of joining the veneer precursor, the framework and the compensation material to form the dental restoration, comprises the steps of
- forming from the veneer precursor a veneer facing having the veneer color shade C; and
- forming from the compensation material a veneer backing having the compensation material color shade B;
   wherein the veneer facing and the veneer backing form a veneer.

The veneer may be in direct contact with the framework. In particular the veneer and the framework may be in direct contact with one another substantially without or without a bonding layer in between. Such bonding layer may be, for example, a luting material comprising a resin or polymer, or may be a cement.

Therefore the veneer facing, the veneer backing and the framework when joined may approximate or exhibit a dental restoration having a tooth color shade D. In particular, the veneer facing, the veneer backing and the framework when joined with the veneer backing arranged between the veneer facing and the framework may approximate or exhibit a restoration having a tooth color shade D.

In a particular embodiment the tooth color shade D is a function of the framework color shade A, the veneer color shade C and the compensation material color shade B when the color shades A, B and C are combined. The color shades A, B and C may, for example, be combined by overlaying layers of a material exhibiting the color shades A, B, and C. The tooth color D may for example be observable by looking at the veneer facing, which itself has the color shade C, with the other colored layers arranged behind it. Preferably the layers are overlaid with their surfaces touching one another. The layers may also be fused with one another.

The framework color shade A and the veneer color shade C when combined may form a color shade D*. The color shade D* may have a color difference DD from the tooth color shade D. The compensation material color shade is selected to compensate for the color difference DD.
In another embodiment the veneer precursor is substantially comprised of pre-sintered glass-ceramic particles. In this case the veneer precursor may be later sintered to its final density. A veneer precursor of pre-sintered glass-ceramic particles may have an open-celled material structure. This may be advantageous for joining the veneer precursor with the framework and the compensation material because air that may be trapped between the joined parts may escape through the open cells. The veneer precursor is also substantially comprised of sintered glass-ceramic.

In a further embodiment the step of joining the veneer precursor, the framework and the compensation material comprises the steps of:
- applying the compensation material to at least one of the framework and the veneer precursor to form a dental restoration precursor;
- sintering the dental restoration precursor to form the dental restoration.

The compensation material comprises a glass-ceramic material. In particular, the compensation material may be substantially comprised of glass-ceramic particles. The compensation material may further comprise colouring additives and/or color shaded glass-ceramic particles.

The step of providing the compensation material comprises providing glass-ceramic particles dispersed in a carrier material. The step of applying the compensation material may comprise applying the dispersion of the glass-ceramic particles and the carrier material to at least one of the framework and the veneer precursor. The step of applying the compensation material may further comprise humidifying a surface of one or both of the framework and the veneer precursor. The step of joining the veneer precursor, the framework and the compensation material comprises the step of removing the carrier material from the dental restoration. Thereby the glass-ceramic particles are left behind in the dental restoration. Removing the carrier material may comprise heating of the carrier material, for example exclusively heating the carrier material. Heating may include heating the carrier material above its melting, boiling or vaporization point. The carrier material thereby may flow out and/ evaporate. An open-celled veneer precursor again is believed to be advantageous to allow the carrier material to escape. Exclusively heating the carrier material may be achieved by supplying heat to substantially only the carrier material, and substantially not to another part or other parts of the dental restoration. For example, the carrier material may be made of a material that allows heating by microwaves, and the microwaves may not have a considerable effect to the ceramics.

In a particular embodiment the selected compensation material color shade B is created by use of at least one compensation raw material from a set of differently shaded compensation raw materials. In another particular embodiment the selected compensation material color shade B is one from among a set of differently shaded compensation raw materials. A set of compensation raw materials may comprise for example 4, 6, 8, 12 or more materials each having a different color shade. The set of compensation raw materials may comprise more color shades than the set of discrete color shades from which the veneer color shade C is selected. The different color shades are preferably selected to allow creating many colors in a broad continuous color range by mixing certain compensation raw materials at certain mixing ratios. The compensation raw materials may for example comprise glass-ceramic particles that are added different colouring additives and/or colouring additives at different quantities.

In one embodiment the set of veneer color shades comprises at least two different veneer color shades having L*a*b* color coordinates selected from among:
C1: L*=62.4, a*=-1.0, b*=-3.5 (opacity = 57.2);
C2: L*=60.6, a*=-1.5, b*=-1.8 (opacity = 55.1);
C3: L*=58.4, a*=-2.0, b*=0.5 (opacity = 56.2); and
C4: L*=54.7, a*=-1.6, b*=1.9 (opacity = 49.7).
The veneer color shades C1, C2, C3 and C4 may vary with a tolerance of 1% on each the L*, a*, b* value as well as in the opacity. The tolerance may also be 2% or up to 5%.

The veneer precursor may be uniformly shaded according to the veneer color shade. In particular the veneer precursor when finally sintered may be uniformly shaded in the veneer color shade.
In another embodiment the framework color shade has L*a*b* color coordinates selected from among:
A1: L*=75.4, a*=-0.9, b*=14.9 (opacity = 88.6);
A2: L*=76.8, a*=-0.9, b*=9.3 (opacity = 87.2);
A3: L*=72.8, a*=1.4, b*=18.3 (opacity = 90.0); and
A4: L*=68.8, a*=0.2, b*=22.0 (opacity = 94.7).
The framework color shades A1, A2, A3 and A4 may vary with a tolerance of 1% on each the L*, a*, b* value as well as in the opacity. The tolerance may also be 2% or up to 5%.

In a further embodiment the compensation material color shade has L*a*b* color coordinates selected from among:
B1: L*=66.4, a*=-0.1, b*=16.5 (opacity = 88.0);
B2: L*=73.0, a*=-1.0, b*=12.5 (opacity = 80.0);
B3: L*=69.0, a*=1.7, b*=19.5 (opacity = 88.0); and
B4: L*=97.5, a*=4.0, b*=22.5 (opacity = 97.5).
The compensation material color shades B1, B2, B3 and B4 may vary with a tolerance of 1% on each the L*, a*, b* value as well as in the opacity. The tolerance may also be 2% or up to 5%.

In still another embodiment the resulting tooth color shade resembles the color shade of natural human teeth. The resulting color shade may have L*a*b* color coordinates selected from among:
D1: L*=74.93, a*=0.80, b*=13.34 (opacity = 96.5);
D2: L*=81.04, a*=0.12, b*=12.12 (opacity = 95.25);
D3: L*=73.70, a*=1.40, b*=18.20 (opacity = 96.35); and
D4: L*=65.74, a*=3.08, b*=17.13 (opacity = 99.25).
The tooth color shades D1, D2, D3 and D4 may vary with a tolerance of 1% on each the L*, a*, b* value as well as in the opacity. The tolerance may also be 2% or up to 5%.

A second aspect, not part of the invention, is related to a method of making a veneer for a dental restoration. The method comprises the steps of:
- providing a veneer facing having a color shade C;
- providing a veneer backing having a color shade B; and
- joining the front and rear layers to form the veneer;
wherein the veneer facing and veneer backing are at least substantially comprised of a glass-ceramic material, and the color shades B and C are different.

In one embodiment the veneer facing and veneer backing are directly joined with one another. In particular the veneer facing and veneer backing may be joined with each other without the use of additional material. For example, the veneer facing and veneer backing may be joined without the use of luting materials, like luting cements, luting composites or other luting agents. The veneer facing and veneer backing may be fused to one another, for example by sintering.

In a particular embodiment the step of making the veneer facing comprises the step of obtaining a veneer precursor from a pre-sintered glass-ceramic material. The veneer precursor may be obtained by milling the veneer precursor from the pre-sintered glass-ceramic material.

In another particular embodiment the step of providing the veneer backing comprises the step of obtaining a compensation material from glass-ceramic particles. The glass-ceramic particles may be mixed with color pigments. The glass-ceramic particles may further comprise colored glass-ceramic particles. Obtaining a compensation material may also include the step of bringing glass-ceramic particles in contact with a carrier material, like an aqueous solution or water. Further, the step of providing compensation material may include the step of mixing ceramic particles and a carrier material.

In another embodiment the veneer facing is a lighter color than the veneer backing.

A veneer provided according to the second aspect may be joined with a framework to form a dental restoration. A luting material may be used to join the veneer with a framework. However, the veneer may also be joined with a framework by fusion, for example by sintering the assembled framework and the veneer. Such a veneer may have a satisfactory appearance when joined to the framework because the color shading in the veneer may provide an optical compensation of the transition between the veneer material and a different framework material.

A third aspect, not part of the invention, is related to a kit which comprises:
- at least two veneer precursors of a glass-ceramic material, each adapted to exhibit a different veneer color shade when finally sintered; and
- a compensation material of a glass-ceramic material, adapted to exhibit a color shade selected from a continuous range of compensation material color shades when finally sintered.

The kit may further comprise at least 2 differently color shaded compensation raw materials, in particular 4, 6, 8 or 12 differently color shaded compensation raw materials. The kit may also comprise a plurality of differently color shaded compensation raw materials. The kit may generally comprise more differently shaded compensation raw materials than veneer color shades. The compensation raw materials are preferably adapted to be mixed to form the compensation material.

The veneer pre-cursors may be comprised of a pre-sintered or sintered glass-ceramic material. Each veneer precursor when finally sintered preferably has a certain veneer color shade C. Further, the compensation material may have a certain compensation material color shade B. However, both the veneer precursor and the compensation material may have initially (for example when not sintered or only pre-sintered) have color shades that are different from the veneer color shade C and compensation material color shade B, respectively.

The kit may comprise 2, 3 or 4 veneer precursors with each of the precursors exhibiting a different veneer color shade when (finally) sintered. The veneer color shades may have L*a*b* color coordinates selected from among the veneer color shades C1, C2, C3 and C4 as specified above.

In another embodiment the kit may comprise a mixing well and optionally a mixing spatula for mixing the compensation raw materials to form a compensation material having a color shade B. Further the kit may comprise instructions to mix the compensation material so that it exhibits a certain color shade B. The kit may also include instructions allowing the determination of the color shade B to achieve a color shade D when it is combined with the veneer color shade C, and optionally when it is additionally combined with a framework color shade A.

A fourth aspect, not part of the invention, is directed to a method of creating a kit for carrying out the method of the invention. The method may comprise the step of selecting a minimum number of framework color shades A, compensation material color shades B and veneer color shades C to provide combinations that cover a desired continuous range of tooth color shades D.

The method may alternatively comprise the steps of:
- selecting a minimum number of veneer color shades C, and
- providing necessary framework color shades A and compensation material color shades B that cover in combination with the selected veneer color shade C a desired continuous range of tooth color shades D.

The method may alternatively comprise the steps of:
- selecting a minimum number of veneer color shades C, and
- selecting a minimum number of framework color shades A, and
- providing the necessary compensation material color shades B which covers in combination with the selected framework color shades A and veneer color shade C a desired continuous range of tooth color shades D.

The minimum number of framework color shades A, compensation material color shades B and veneer color shades C may be for example one selected from the list (A/B/C): 4/4/4, 4/6/4, 4/8/4, 4/4/1, 4/2/1.

A fifth aspect, not part of the invention, is related to a use of a kit for the manufacture of a dental restoration. For example, the use may comprise the selection of a veneer precursor having a particular veneer color shade C when (finally) sintered, determination of the desired tooth shade D, and making a compensation material by use of a set of compensation raw materials so that it exhibits a compensation material color shade B when the compensation material is (finally) sintered.

A sixth aspect, not part of the invention, is directed to a dental restoration. The dental restoration comprises a veneer facing having a veneer color shade selected from among L*a*b* color coordinates C1, C2, C3 and C4 as specified above, and a veneer backing having a compensation material color shade selected from among L*a*b* color coordinates B1, B2, B3 and B4 as specified above. The dental restoration may further comprise a framework having a framework color shade selected from among L*a*b* color coordinates A1, A2, A3 and A4 as specified above.

In a particular embodiment the dental restoration comprises a veneer being comprised of a veneer facing having a veneer color shade C, and a veneer backing having a compensation material color shade B. Preferably the veneer color shade C and the compensation material color shade B are different. The veneer facing and the veneer backing may be made of a glass-ceramic material. The veneer color shade C may have a color with at least one of the L*, a* and b* values being lower than the corresponding L*, a* and b* values of the compensation material color shade B. In particular, the veneer color shade C may have a color with the L* value being lower than the L* value of the compensation material color shade B. In more particular, the L* value of the veneer color C may be lower by 10%, 30% or 50% than the L* value of the compensation material color shade B. Due to creating a color transition in the veneer a viewer may perceive the transition between a relatively translucent veneer and the typically less translucent framework as a relatively smooth transition.

A framework as it may be used with the embodiments of the present invention may be made of a ceramic material. For example, one comprising between 90% and 99% by weight zirconium oxide, and preferably between 91% and 97.25% by weight zirconium oxide. The ceramic material of the framework may further comprise 0% to 1 % by weight aluminium oxide. The ceramic material may also be based on aluminium oxide, in which case it may comprise 90% to 99% by weight aluminium oxide and 0% to 1% by weight zirconium oxide. Further the ceramic material may generally comprise 0% to 10% by weight of at least one of hafnium oxide, yttrium oxide and oxides from gallium, germanium, and indium. The ceramic material may also comprise 0.0005% to 1.5% by weight of colouring additives, selected from the group consisting of the oxides Fe₂O₃, Er₂O₃ and/or MnO₂. The ceramic material of the frame is preferably selected to be compatible for use in human bodies.

A veneer precursor and a compensation material as it may be used with the embodiments of the present invention preferably are made of a glass ceramic material. An exemplary formulation of a glass ceramic as it may be used with the present invention comprises 60 % to 70% by weight of silica, 9% to 13% by weight of alumina, 5% to 10% by weight of potassium-oxide, 9% to 13% by weight of sodium-oxide, 0% to 1% by weight of lithium-oxide, 2% to 5% by weight of calcia, 1% to 2% by weight of barium-oxide, 0% to 1% by weight of zirconium oxide and 0% to 1% cerium-oxide or cerium-fluoride.

The present disclosure may by advantageous in that it helps to provide a veneer for dental restorations by use of automatic processes. Further, the disclosure may allow making dental restorations at a relatively large variety of tooth colors by combining a limited variety of differently colored initial materials. The disclosure may for example generally provide for using only a limited number of color shades for more complex or more expensive components, and variable color shades with other components that are less complex or less expensive, so that a dental restoration may be provided at variable color shades without providing completely variable color shades for all components. In particular, the disclosure may provide for making a pre-finished part with only a few discrete color shades which by combination with at least one additional part may result in a dental restoration having a desired tooth color selected from among a continuous range of tooth color shades. Making pre-finished parts in a limited number of colors may help to reduce efforts to store differently colored initial material, convert or clean manufacturing equipment, and it may help to avoid errors due to confusion of colors. The disclosure also may provide for manufacturing a veneer and/or a dental restoration in a configuration in which a desired color and a desired shape are achieved in two substantially separate processes. Separate processes may, for example, reduce the complexity of manufacturing the dental restoration, and therefore reduce manufacturing costs. Furthermore, the invention may allow for making dental restorations that are substantially or fully comprised of ceramic material, but still have a relatively mechanically stable framework and an optically pleasant veneer. The invention may also be advantageous in that it may allow an assembly or fusion of the veneer and the framework without or substantially without the use of organic binders or adhesives.

The invention may provide as a further advantage an optimized transition between the veneer and the framework of the dental restoration. In particular, a color transition in the veneer may help to optically compensate for a translucency change in the transition between the veneer and the framework.

### Brief Description of the drawings

- Fig. 1: is a schematic cross-sectional view of a natural tooth having a dental restoration according to an embodiment of the disclosure;
- Fig. 2: is a schematic exploded view of the dental restoration according to an embodiment of the disclosure;
- Fig. 3: is a schematic diagram illustrating the color shades of the components shown in Fig. 2: and
- Fig. 4: is a schematic diagram illustrating the CIE L*a*b* color system used for defining color shades within this specification.

### Detailed Description of the Embodiments

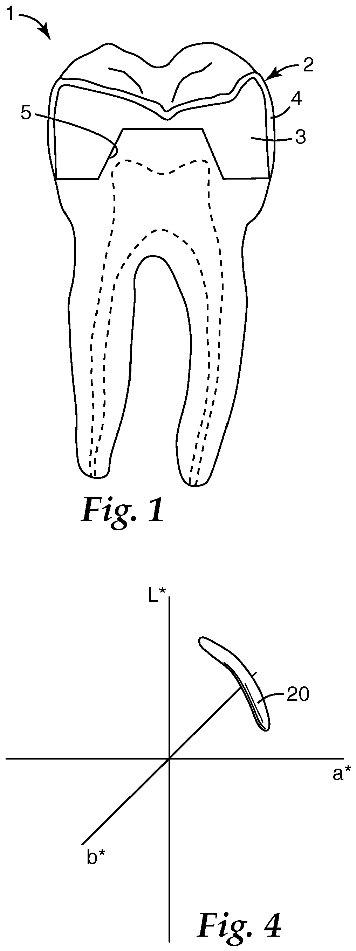

Fig. 1 shows a schematic cross-section of a natural tooth that has been restored with a dental restoration as it may be provided by the present disclosure. The tooth in the example is restored by a dental restoration 2 that is comprised of a ceramic framework 3 and a glass-ceramic veneer 4. The framework 3 has an inner surface 5 which is mated with a corresponding portion of the natural tooth. The structure shaped in the tooth may, for example, be ground by a dentist to remove decayed tooth substance and to provide the tooth with an interface for affixing the framework to the tooth. Although the disclosure is explained referring to a crown by way of example only in Fig. 1, other types of dental restorations may be used as, for example, partial crowns (covering only one, two, or three rather than all four side faces of the tooth), inlays, onlays, or bridges.

The ceramic material of the framework is typically selected to provide the dental restoration with the necessary mechanical stability. Further, the ceramic framework is typically colored to resemble a shade of natural tooth dentine. The glass-ceramic material of the veneer typically provides the dental restoration with a more natural appearance by adding a certain translucency and a color that resembles that of natural tooth enamel. Typically the color of the framework together with the color of the veneer results in an overall resulting tooth color.

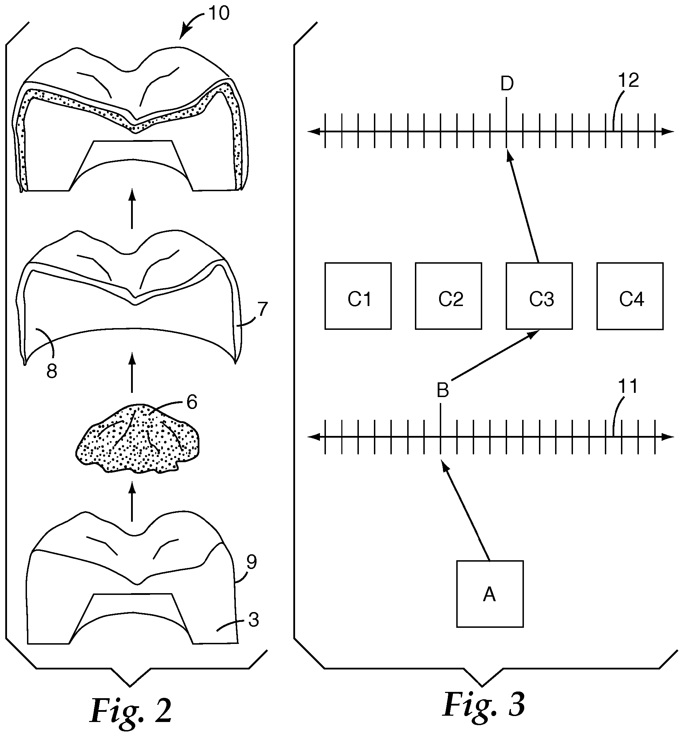

Fig. 2 schematically shows in more detail an exemplary construction of the dental restoration as it may be provided by making use of the disclosure. The framework 3 may be provided as pre-finished part. For example a framework precursor may be machined, for example milled, from a blank comprised of pre-sintered ceramic particles, and the precursor may be finally sintered to form the framework. However, the blank may also be a final sintered or cast ceramic material that is machined to directly obtain the framework for the blank, for example by milling or grinding. A veneer precursor 7 may be provided also as a pre-finished part. The veneer precursor 7 may be substantially comprised of pre-sintered ceramic particles, and may be (finally) sintered later. Alternatively the veneer precursor 7 may already be substantially comprised of a sintered or cast glass-ceramic material. Preferably the veneer precursor 7 together with a compensation material 6 forms a veneer. In other words, preferably the veneer precursor 7 only forms part of the veneer and the compensation material forms another part of the veneer. As indicated in Fig. 2 the compensation material 6 may comprise glass-ceramic particles in a loose or powdery form. The glass-ceramic particles may be dispersed in a carrier material for facilitating application to the veneer precursor 7 and/or the framework 3. In a particular example the carrier material may be an aqueous solution. The aqueous solution may be free of binders, or may be just water. The glass-ceramic particles may also be otherwise applied to the veneer precursor 7 and/or the framework 3, for example by sputtering, spraying, 3D printing, by immersion or by otherwise coating. Carrier materials may be used as appropriate to carry out the application methods described. The veneer precursor 7 and/or the framework 3 may be humidified prior to applying the glass-ceramic particles.

The veneer precursor 7 and the framework 3 may be assembled with the compensation material 6 arranged between to provide an assembled dental restoration precursor. The assembled dental restoration precursor may be sintered or fired so that the compensation material fuses with the veneer precursor and the framework. If a pre-sintered veneer precursor is used the precursor thereby may be sintered, for example to its final density. During sintering carrier material used with the glass-ceramic particles may evaporate and thereby be removed from the dental restoration. In this regard a pre-sintered veneer precursor which typically has an open-celled material structure may be advantageous in that it allows the carrier material to escape.

Fig. 3 shows a schematic diagram outlining the color shades of the components 3, 6, 7, 10 that are shown in Fig. 2. Figs. 2 and 3 are coordinated to show the color shades (Fig. 3) and the associated components (Fig. 2) side by side. The colors referred to in the example are related to components in their final stage, for example when finally sintered. Although the compensation material 6 and the veneer precursor 7 may not be available in a finally sintered stage as separate parts, for better explanation their color shades are specified according to their characteristics in the final dental restoration. Fig. 3 shows a color shade A which corresponds to the color shade of the framework 3. The color shade A may be a standard color which approximately corresponds to the color of natural tooth dentine. It is also possible to provide frameworks of other color shades. However, it has been found desirable to use a limited number of color shades, or even to use only one color shade for the framework. This helps to reduce the amount of differently color shaded blanks that have to be offered and supplied by ceramic material suppliers. Another advantage of having a limited number of color shades to select from may be to help to reduce errors resulting from mistaken color selection.

On the other hand it is desirable to provide a dental restoration that resembles a certain desired natural tooth color. In the example of Fig. 3 a number of veneer colors C1 to C4 are provided. Therefore, also in the manufacturing of the veneer precursor advantages can be obtained from having only a limited number of differently shaded blanks. The colors C1 to C4 may be selected to be distributed across a broad range of possible colors. For example there may be light and dark colors C1 and C4 and two colors C2 and C3 between them.

The desired color shade D of the dental restoration is shown on a continuous scale 11, indicating that the color shade D may be created using a variety of different color shade variations as is desirable in the dental field. The scale in Fig. 3 is drawn linearly for better explanation only. In reality colors typically represent a sensory perception of humans, and the color of an article is perceived depending on a variety of physical or material characteristics related to that article, like emission, transmission, absorption, and reflection characteristics, for example. A model for representing colors is described below.

The color shade D is achieved as a result of the combination of the color shades A and C as well as of the color shade B. Surprisingly it has been found that by use of the compensation material 6 at a color from a continuous color scale the final color shade D of the dental restoration may be adjusted as desired, although other parts of the dental restoration may be selected from among a limited number of pre-determined color shades. In particular, if one or both of the color shades A and C deviate from D, B may be selected to complement A and C to form D. Further, also if a combination of color shades A and C deviates from D, B may be selected to complement A and C to form D.

The split veneer construction may also provide other advantages. The veneer precursor may for example provide the dental restoration with a desired outer shape. In contrast, the compensation material may provide a certain color shade that in combination with other parts of the dental restoration provides the final tooth color shade. Therefore, the part which is critical for the shape may be cost efficiently manufactured by using a limited variety of blank types. Further, the part which is critical for the color can be relatively easily provided because it can be quickly mixed as desired from a number of differently shaded materials, and it obtains its shape automatically from being sandwiched between other parts of the dental restoration. The split veneer construction may further provide for a more satisfactory optical transition between the veneer and the framework of the dental restoration. This may be achieved, for example, by combining a relatively light colored veneer precursor and a comparatively darker colored compensation material. In this way a veneer may be created having a certain resulting color that may be adjusted in a range between the color of the veneer precursor and the color of the compensation material. The resulting veneer may be substantially entirely made of a relative translucent glass-ceramic material. The transition between the relatively translucent veneer and the typically comparably more opaque framework of the dental restoration may appear smoother because there may be a first transition from a lighter color towards a darker color at similar translucency, and subsequently a second transition from relative translucent material towards a less translucent material.

Fig. 4 schematically outlines a color model that is often used for describing color shades of teeth. In the past, many color modeling systems have been provided to express the human color perception in numeric form. The CIE L*a*b* color system (CIE1976 - standardized 1976 by the Commission Internationale de I'Eclairage) has become the favored system in the field of dentistry. The model is based on a three-dimensional coordinate system in which a* represents a value on a red - green axis ranging from green to red with a linear transition gradient. The variable b* is a value on a blue - yellow axis, and L* is a brightness value given on a black - white axis (100 = white, 0 = black). The three-dimensional space 20 approximately outlines the area of natural tooth colors.

The following table summarizes color shades measured on samples that were configured according to the disclosure. The L*a*b* values were determined using a commercially available Hunter Lab System (available from the Hunter Lab. Inc. of Reston, Virginia according to the instructions of use given in the manufacturer's operation manual referring to the formulas given in DIN 6174 (Section 2). The data were determined at dense sintered samples. The surfaces of the samples were polished (grinding steps; 74 µm, 10 µm, 9 µm, 3 µm). The following adjustments were made at the Hunter Lab: measuring orifice: 6 mm, measuring spot size: 6 mm. The sample diameter was in a range of 10.8 to 13.6 mm, the thicknesses of the samples were as follows:
- sample for color shade A: 1.5 mm
- sample for color shade B: 0.8 mm
- sample for color shade C: 0.4 mm
- sample for color shade D: 1.5 mm + 0.8 mm + 0.4 mm = 2.7 mm
The opacity of each individual sample is specified as parameter "O" in the table below.

| **Framework Color Shade** | **Veneer Color Shade** | **Desired Tooth Color Shade** | **Required Compensation Material Color Shade** |
|---|---|---|---|
| **A** | **C** | **D** | **B** |
| O = 88,6 | O = 57,2 | O = 96,25 | O = 88,0 |
| L* 75,4 | L* 62,4 | L* 74,93 | L* 66,4 |
| a* -0,9 | a* -1,0 | a* 0,80 | a* -0,1 |
| b* 14,9 | b* -3,5 | b* 13,34 | b* 16,5 |
| O = 87,2 | O = 55,1 | O = 95,25 | O = 80,0 |
| L* 76,8 | L* 60,6 | L* 81,04 | L* 73,0 |
| a* -0,9 | a* -1,5 | a* 0,12 | a* -1,0 |
| b* 9,3 | b* -1,8 | b* 12,12 | b* 12,5 |
| O = 90,0 | O = 56,2 | O = 96,35 | O = 88,0 |
| L* 72,8 | L* 58,4 | L* 73,7 | L* 69,0 |
| a* 1,4 | a* -2,0 | a* 1,4 | a* 1,7 |
| b* 18,3 | b* 0,5 | b* 18,20 | b* 19,5 |
| O = 94,7 | O = 49,7 | O = 99,25 | O = 97,5 |
| L* 68,8 | L* 54,7 | L* 65,74 | L* 59,0 |
| a* 0,2 | a* -1,6 | a* 3,08 | a* 4,0 |
| b* 22,0 | b* 1,9 | b* 17,13 | b* 22,5 |

The invention has now been described by way of several examples. However, people of ordinary skill in the art will understand that various changes and substitutions can be made without departing from the scope of the invention as defined by the appended claims.

## Claims

1. A method of making a dental restoration (2), the dental restoration having a tooth color shade D selected from among a continuous range of tooth color shades; the method comprising the steps of:
- providing as pre-finished part a framework (3) having a framework color shade A;
- providing as pre-finished part a veneer precursor (7) according to a veneer color shade C selected from among a set of discrete color shades, the veneer precursor being substantially comprised of pre-sintered glass-ceramic particles and having an open-celled material structure;
- providing a compensation material (6) according to a compensation material color shade B selected from among a continuous range of color shades, the step of providing the compensation material comprises providing glass-ceramic particles dispersed in a carrier material; and
- joining the veneer precursor, the framework and the compensation material to form the dental restoration, wherein the step of joining the veneer precursor, the framework and the compensation material comprises the steps of:
- applying the compensation material to at least one of the framework and the veneer precursor to form a dental restoration precursor;
- sintering the dental restoration precursor to form the dental restoration; and
- removing the carrier material, and leaving the glass-ceramic particles;
- wherein the compensation material color shade B is selected such that together with the veneer color shade C and the framework color shade A, the dental restoration approximates the desired tooth color shade D.

2. The method of claim 1, wherein the selected compensation material color shade is created by use of at least one compensation raw material from a set of differently shaded compensation raw materials;

3. The method of any claim 1 or 2, wherein the set of veneer color shades comprises at least two different veneer color shades having L*a*b* color coordinates selected from among:
C1: L*=62.4, a*=-1.0, b*=-3.5 (opacity = 57.2);
C2: L*=60.6, a*=-1.5, b*=-1.8 (opacity = 55.1);
C3: L*=58.4, a*=-2.0, b*=0.5 (opacity = 56.2); and
C4: L*=54.7, a*=-1.6, b*=1.9 (opacity = 49.7).

4. The method of any of the preceding claims, wherein the veneer precursor is uniformly shaded according to the veneer color shade.

5. The method of any of the preceding claims, wherein the framework color shade has L*a*b* color coordinates selected from among:
A1: L*=75.4, a*=-0.9, b*=14.9 (opacity = 88.6);
A2: L*=76.8, a*=-0.9, b*=9.3 (opacity = 87.2);
A3: L*=72.8, a*=1.4, b*=18.3 (opacity = 90.0); and
A4: L*=68.8, a*=0.2, b*=22.0 (opacity = 94.7).

6. The method of any of the preceding claims, wherein the compensation material color shade has L*a*b* color coordinates selected from among:
B1: L*=66.4, a*=-0.1, b*=16.5 (opacity = 88.0);
B2: L*=73.0, a*=-1.0, b*=12.5 (opacity = 80.0);
B3: L*=69.0, a*=1.7, b*=19.5 (opacity = 88.0); and
B4: L*=59,0, a*=4.0, b*=22.5 (opacity = 97.5).

7. The method of any of the preceding claims, wherein the resulting color shade has L*a*b* color coordinates selected from among:
D1: L*=74.93, a*=0.80, b*=13.34 (opacity = 96.25);
D2: L*=81.04, a*=0.12, b*=12.12 (opacity = 95.25);
D3: L*=73.70, a*=1.40, b*=18.20 (opacity = 96.35); and
D4: L*=65.74, a*=3.08, b*=17.13 (opacity = 99.25).

## Patentansprüche

1. Verfahren zum Herstellen einer Zahnrestaurierung (2),
wobei die Zahnrestaurierung einen Zahnfarbton D aufweist, der aus einem kontinuierlichen Bereich von Zahnfarbtönen ausgewählt ist; wobei das Verfahren die folgenden Schritte umfasst:
- Bereitstellen als vorgefertigter Teil einer Trägerstruktur (3) mit einem Trägerstruktur-Farbton A;
- Bereitstellen als vorgefertigter Teil eines Veneer-Vorläufers (7) gemäß eines Veneerfarbtons C, der aus einem Satz separater Farbtöne ausgewählt ist, wobei der Veneer-Vorläufer im Wesentlichen aus vorgesinterten Glaskeramikteilchen besteht und eine offenzellige Materialstruktur aufweist;
- Bereitstellen eines Ausgleichsmaterials (6) gemäß einem Ausgleichsmaterial-Farbton B, der aus einem kontinuierlichen Bereich von Farbtönen ausgewählt ist, wobei der Schritt des Bereitstellens des Ausgleichsmaterials das Bereitstellen von Glaskeramikteilchen, die in einem Trägermaterial dispergiert sind, umfasst; und
- Zusammenfügen des Veneer-Vorläufers, der Trägerstruktur und des Ausgleichsmaterials, um eine Zahnrestaurierung zu bilden, wobei der Schritt des Zusammenfügens des Veneer-Vorläufers, der Trägerstruktur und des Ausgleichsmaterials die folgenden Schritte umfasst:
- Auftragen des Ausgleichsmaterials auf mindestens eines von der Trägerstruktur und dem Veneer-Vorläufer, um einen Zahnrestaurierungsvorläufer zu bilden;
- Sintern des Zahnrestaurierungsvorläufers, um die Zahnrestaurierung zu bilden; und
- Entfernen des Trägermaterials und Belassen der Glaskeramikteilchen;
- wobei der Ausgleichsmaterial-Farbton B so ausgewählt ist, dass zusammen mit dem Veneer-Farbton C und dem Trägerstruktur-Farbton A die Zahnrestaurierung dem gewünschten Zahnfarbton D nahe kommt.

2. Verfahren nach Anspruch 1, wobei der ausgewählte Ausgleichsmaterial-Farbton durch die Verwendung von mindestens einem Ausgleichsrohmaterial aus einem Satz unterschiedlich getönter Ausgleichsrohmaterialien erzeugt wird;

3. Verfahren nach einem der Ansprüche 1 oder 2, wobei der Satz von Veneer-Farbtönen mindestens zwei unterschiedliche Veneer-Farbtöne mit L*a*b*-Farbkoordinaten umfasst, ausgewählt aus:
C1: L*=62,4, a*=-1,0, b*=-3,5 (Trübung = 57,2);
C2: L*=60,6, a*=-1,5, b*=-1,8 (Trübung = 55,1);
C3: L*=58,4, a*=-2,0, b*=0,5 (Trübung = 56,2); und
C4: L*=54,7, a*=-1,6, b*=1,9 (Trübung = 49,7).

4. Verfahren nach einem der vorstehenden Ansprüche, wobei der Veneer-Vorläufer gleichmäßig gemäß dem Veneer-Farbton getönt ist.

5. Verfahren nach einem der vorstehenden Ansprüche, wobei der Trägerstruktur-Farbton L*a*b*-Farbkoordinaten aufweist, ausgewählt aus:
A1: L*=75,4, a*=-0,9, b*=14,9 (Trübung = 88,6);
A2: L*=76,8, a*=-0,9, b*=9,3 (Trübung = 87,2);
A3: L*=72,8, a*=1,4, b*=18,3 (Trübung = 90,0); und
A4: L*=68,8, a*=0,2, b*=22,0 (Trübung = 94,7).

6. Verfahren nach einem der vorstehenden Ansprüche, wobei der Ausgleichsmaterial-Farbton L*a*b*-Farbkoordinaten aufweist, ausgewählt aus:
B1: L*=66,4, a*=-0,1, b*=16,5 (Trübung = 88,0);
B2: L*=73,0, a*=-1,0, b*=12,5 (Trübung = 80,0);
B3: L*=69,0, a*=1,7, b*=19,5 (Trübung = 88,0); und
B4: L*=59,0, a*=4,0, b*=22,5 (Trübung = 97,5).

7. Verfahren nach einem der vorstehenden Ansprüche, wobei der resultierende Farbton L*a*b*-Farbkoordinaten aufweist, ausgewählt aus:
D1: L*=74,93, a*=0,80, b*=13,34 (Trübung = 96,25);
D2: L*=81,04, a*=0,12, b*=12,12 (Trübung = 95,25);
D3: L*=73,70, a*=1,40, b*=18,20 (Trübung = 96,35); und
D4: L*=65,74, a*=3,08, b*=17,13 (Trübung = 99,25).

## Revendications

1. Procédé de fabrication d'une restauration dentaire (2),
la restauration dentaire présentant une nuance de couleur de dent
D choisie parmi une plage continue de nuances de couleur de dent ; le procédé comprenant les étapes consistant à :
- fournir en tant que pièce préfinie une structure (3) présentant une nuance de couleur de structure A ;
- fournir en tant que pièce préfinie un précurseur de facette (7) selon une nuance de couleur de facette C choisie parmi un ensemble de nuances de couleur distinctes, le précurseur de facette étant essentiellement constitué de particules vitrocéramiques pré-frittées et ayant une structure de matériau à alvéoles ouvertes ;
- fournir un matériau de compensation (6) selon une nuance de couleur de matériau de compensation B choisie parmi une plage continue de nuances de couleur, l'étape de fourniture du matériau de compensation comprend la fourniture de particules vitrocéramiques dispersées dans un matériau de support ; et
- joindre le précurseur de facette, la structure et le matériau de compensation pour former la restauration dentaire, dans lequel l'étape consistant à joindre le précurseur de facette, la structure et le matériau de compensation comprend les étapes consistant à :
- appliquer le matériau de compensation sur au moins un parmi la structure et du précurseur de facette pour former un précurseur de restauration dentaire ;
- fritter le précurseur de restauration dentaire pour former la restauration dentaire ; et
- retirer le matériau de support, et laisser les particules vitrocéramiques ;
- dans lequel la nuance de couleur de matériau de compensation B est choisie de telle sorte que, conjointement avec la nuance de couleur de facette C et la nuance de couleur de structure A, la restauration dentaire s'approche de la nuance de couleur de dent D souhaitée.

2. Procédé selon la revendication 1, dans lequel la nuance de couleur de matériau de compensation choisie est créée par l'utilisation d'au moins une matière première de compensation parmi un ensemble de matières premières de compensation différemment nuancées ;

3. Procédé selon l'une quelconque revendication 1 ou 2, dans lequel l'ensemble de nuances de couleur de facette comprend au moins deux nuances de couleur de facette différentes ayant des coordonnées de couleur L*a*b* choisies parmi :
C1 : L*=62,4, a*=-1,0, b*=-3,5 (opacité = 57,2) ;
C2 : L*=60,6, a*=-1,5, b*=-1,8 (opacité = 55,1) ;
C3 : L*=58,4, a*=-2,0, b*=0,5 (opacité = 56,2) ; et
C4 : L*=54,7, a*=-1,6, b*=1,9 (opacité = 49,7).

4. Procédé selon l'une quelconque des revendications précédentes, dans lequel le précurseur de facette est uniformément nuancé selon la nuance de couleur de facette.

5. Procédé selon l'une quelconque des revendications précédentes, dans lequel la nuance de couleur de structure a des coordonnées de couleur L*a*b* choisies parmi :
A1 : L*=75,4, a*=-0,9, b*=14,9 (opacité = 88,6) ;
A2 : L*=76,8, a*=-0,9, b*=9,3 (opacité = 87,2) ;
A3 : L*=72,8, a*=1,4, b*=18,3 (opacité = 90,0) ; et
A4 : L*=68,8, a*=0,2, b*=22,0 (opacité = 94,7).

6. Procédé selon l'une quelconque des revendications précédentes, dans lequel la nuance de couleur de matériau de compensation a des coordonnées de couleur L*a*b* choisies parmi :
B1 : L*=66,4, a*=-0,1, b*=16,5 (opacité = 88,0) ;
B2 : L*=73,0, a*=-1,0, b*=12,5 (opacité = 80,0) ;
B3 : L*=69,0, a*=1,7, b*=19,5 (opacité = 88,0) ; et
B4 : L*=59,0, a*=4,0, b*=22,5 (opacité = 97,5).

7. Procédé selon l'une quelconque des revendications précédentes, dans lequel la nuance de couleur résultante a des coordonnées de couleur L*a*b* choisies parmi :
D1 : L*=74,93, a*=0,80, b*=13,34 (opacité = 96,25) ;
D2 : L*=81,04, a*=0,12, b*=12,12 (opacité = 95,25) ;
D3 : L*=73,70, a*=1,40, b*=18,20 (opacité = 96,35) ; et
D4 : L*=65,74, a*=3,08, b*=17,13 (opacité = 99,25).
